# EUROPÄISCHE PATENTSCHRIFT

(11) **EP 0 907 039 B1**
(45) Veröffentlichungstag und Bekanntmachung des Hinweises auf die Patenterteilung: **13.11.2002**
(21) Anmeldenummer: 98113159.2
(22) Anmeldetag: 15.07.1998
(51) Int. Cl.: F16F 15/12

(54) **Verfahren zur Herstellung eines Torsionsschwingungstilgers**
Process for the manufacture of a torsional vibration damper
Procédure de fabrication d'un amortisseur de vibrations torsionelles

(30) Priorität: 02.10.1997 DE 19743686
(43) Veröffentlichungstag der Anmeldung: 07.04.1999
(73) Patentinhaber: Carl Freudenberg KG, 69469 Weinheim (DE)
(72) Erfinder: Colford, Terry, Queniborough, Leicestershire (GB)

(56) Entgegenhaltungen:
- EP-A- 0 218 078
- DE-C- 4 235 074
- GB-A- 2 233 424
- PATENT ABSTRACTS OF JAPAN vol. 009, no. 303 (M-434), 30. November 1985 & JP 60 141532 A (TOYODA GOSEI KK;OTHERS: 01), 26. Juli 1985

## Beschreibung

Die Erfindung betrifft ein Verfahren zur Herstellung eines Torsionsschwingungstilgers, bei dem ein Schwung- und ein Nabenring erzeugt und durch nachträgliches Einfügen eines Gummiringes relativ verdrehbar verbunden werden.

Ein solches Verfahren ist aus der Patentschrift DE 4235074 C1 bekannt. Der Schwung- und der Nabenring werden dabei unabhängig von einander erzeugt und durch nachträgliches Einfügen des Gummiringes relativ verdrehbar aneinander festgelegt. Die unabhängige Erzeugung des Naben- und des Schwungringes in Gestalt unabhängiger Einzelteile ist mit erheblichem Aufwand verbunden.

Der Erfindung liegt die Aufgabe zugrunde, ein Verfahren zur Herstellung eines Torsionsschwingungstilgers zu zeigen, das kostengünstiger durchführbar ist als das bekannte Verfahren.

Diese Aufgabe wird erfindungsgemäß bei einem Verfahren der eingangs genannten Art mit den kennzeichnenden Merkmalen von Anspruch 1 gelöst. Auf eine vorteilhafte Ausgestaltung nimmt Anspruch 2 bezug.

Bei dem erfindungsgemäßen Verfahren ist es vorgesehen, daß der Schwungund der Nabenring mit einer Sollbruchstelle an der Übergangszone in Gestalt eines einzigen Stücks erzeugt wird und daß die Sollbruchstelle zur Erzeugung unabhängiger Teile vor oder nach dem Einfügen des Gummirings ohne Werkstoffentnahme zerstört wird. Der Naben- und der Schwungring können zur Zerstörung der Sollbruchstelle in axialer Richtung relativ verschoben werden, beispielsweise unter Anwendung von Zug- und/oder Druckkräften.

Durch die gemeinsame Herstellung des Schwung- und des Nabenringes in Form eines einzigen Stücks besteht die Möglichkeit, die im gebrauchsfertigen Torsionsschwingungstilger einander radialer Richtung umschließenden Flächen, die gemeinsam den den Gummiring aufnehmenden Spalt begrenzen, im selben Arbeitsschritt gemeinsam zu erzeugen, beispielsweise durch eine spahnabhebende Bearbeitung, die sich zugleich auf beide Oberflächen auswirkt. Dadurch ist es ausgeschlossen, daß sich ungünstige Tollerierungen der jeweiligen Durchmesser ungünstig überlagern dergestalt, daß auf dem nachträglich angepreßten Gummiring nicht mehr die zu seiner Festlegung notwendige, radiale Anpressung ausgeübt wird. Die radiale Verpressung des Gummiringes läßt sich hierdurch bei dem erfindungsgemäßen Torsionsschwingungsdämpfers wesentlich besser kontrollieren als bei den Torsionsschwingungstilgern nach dem Stand der Technik. Für die Erzielung einer großen Gebrauchsdauer ist das von großem Vorteil.

Durch die gemeinsame Herstellung des Schwung- und des Nabenringes in einer einzigen Herstellungsoperation ergibt sich außerdem eine deutliche Verminderung der Herstellkosten. Der Naben- und der Schwungring können außerdem als geschlossene Einheit transportiert und gelagert werden bis zur endgültigen Einpressung des Gummiringes. Hinsichtlich des handling ist das von großem Vorteil. Außerdem kann die Zerstörung der Sollbruchstelle gegebenenfalls in den Arbeitsschritt des Einfügens des Gummiringes integriert sein und diesen Schritt gegebenenfalls erleichtern.

Unter Verwendung des erfindungsgemäßen Verfahrens lassen sich sowohl Torsionsschwingungstilger erzeugen, bei denen der Schwungring den Nabenring außenseitig umschließt als auch solche, bei denen der Schwungring auf der Innenseite des Nabenrings angeordnet ist. Desweiteren ist die Verwendung bei der Erzeugung kombinierter Bauformen möglich, die einen Schwungring sowohl auf der Außen- als auch auf der Innenseite haben.

Die einander in radialer Richtung gegenüberliegenden Begrenzungsflächen des Schwung- und des Nabenringes, welche während der bestimmungsgemäßen Verwendung den Gummiring begrenzen, sind normalerweise zylindrisch ausgebildet. Abweichende Gestaltungen sind ohne weiteres möglich, beispielsweise glockenkurven förmige Profile.

Die erfindungsgemäß zur Anwendung gelangende, spannlose Zerstörung der Sollbruchstellen setzt voraus, daß der den Schwung- und den Nabenring bildende Werkstoffkörper eine gewisse Sprödigkeit aufweist. Als besonders geeignet hat sich die Verwendung von Eisenwerkstoffen bewährt.

Die Sollbruchstelle zwischen dem Schwung- und dem Nabenring hat zweckmäßig ein keilförmig zugespitztes Profil, um sicherzustellen, daß die gewollte Zerstörung vor oder nach dem Einfügen des Gummiringes an einer ganz präzise definierten Stelle und unter Vermeidung von Werkstoffablösungen erfolgt. In dem gebrauchsfertigen Torsionsschwingungstilger wird die Bruchkante stets von einer radial vorstehenden Fläche des Schwung- oder des Nabenringes übergriffen, wodurch es ausgeschlossen ist, daß sich bei einer unachtsamen Handhabung in der Nähe des Torsionsschwingunstilgers, die beispielsweise bei Reparaturen benachbarter Teilen erforderlich sein kann, eine Verletzungsgefahr für Personen ergibt. Das äußere Erscheinungsbild kann ansonsten demjenigen der bekannten Torsionstilger entsprechen. Es ist somit problemlos möglich, auf der Außenseite des Schwung- bzw. des Nabenringes ein Zahn- oder Rillenprofil anzubringen, um den gebrauchsfertigen Torsionsschwingungstilger mittels eines Riementriebes mit sekundären Aggregaten zu verbinden.

Das erfindungsgemäße Verfahren wird nachfolgend anhand der Zeichnung weiter verdeutlicht. Es zeigen:
- Figuren 1 bis 3: ein Verfahren zur Herstellung eines Torsionsschwingungstilgers, bei dem der Schwungring den Nabenring in radialer Richtung außenseitig umschließt.
- Figuren 4 bis 6: ein Verfahren zur Herstellung eines Torsionsschwingungstilgers, bei dem der Nabenring den Schwungring in radialer Richtung außenseitig umschließt.

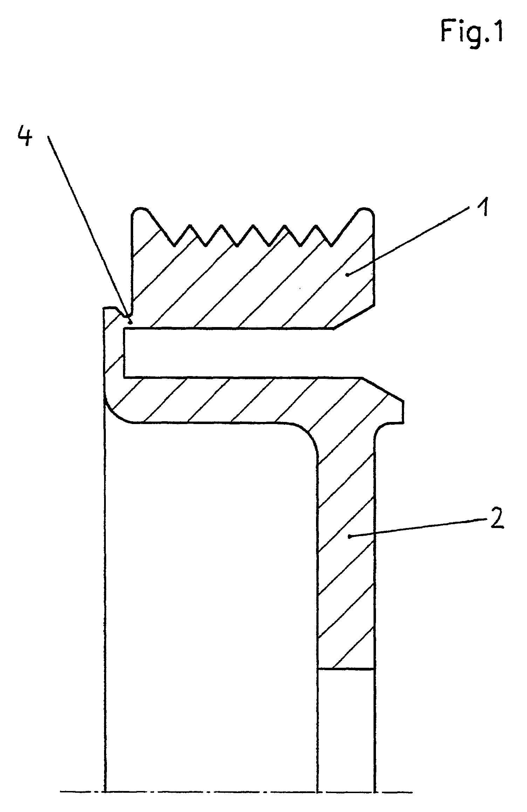

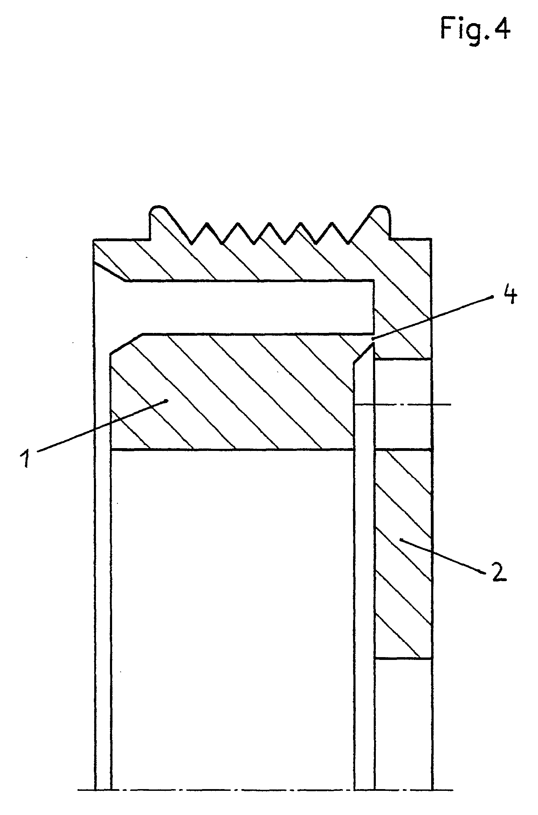

Bei dem in den Figuren 1 bis 6 angedeuteten Verfahren gelangt zur Herstellung des Schwung- und des Nabenringes jeweils ein einstückiger Werkstoffkörper zu Anwendung, der aus Metall besteht und durch Schmieden, Gießen und / oder eine spanabhebende Bearbeitung in eine Gestalt überführt wird, die der in den Figuren 1 bzw. 4 gezeigten entspricht. Der Schwung- und der Nabenring 1, 2 sind dabei durch eine Sollbruchstelle 4 von keilförmig verengtem Profil in einander übergehend ausgebildet und verbunden. Der somit einstückige Schwungund Nabenring können in dieser Form leicht gelagert und versandt werden.

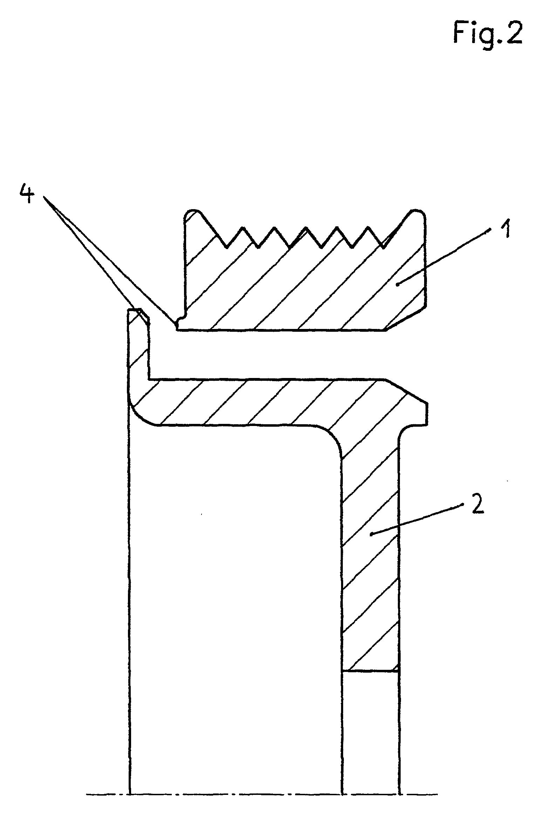

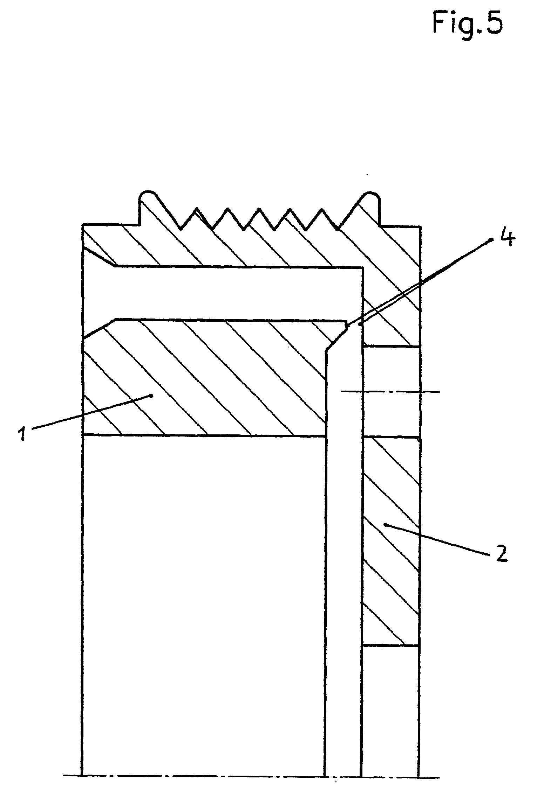

In den Figuren 2 und 5 wird gezeigt, daß der Schwung- und der Nabenring 1, 2 durch eine relative Axialverschiebung von einander getrennt worden sind und nunmehr zwei von einander unabhängige Teile bilden. Die zur Trennung der beiden Teile benötigten Zug- bzw. Druckkräfte bewirken eine spanlose Zerstörung der Sollbruchstelle 4. Die Trennung kann sehr schnell bewirkt werden und erzeugt keine Splitter. Die Relativverschiebung kann vor oder nach dem Einfügen des Gummirings vorgenommen werden.

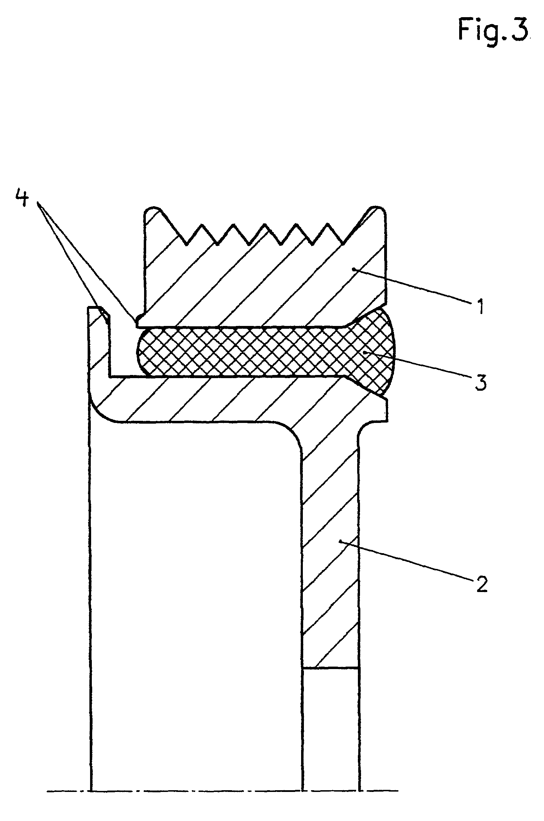

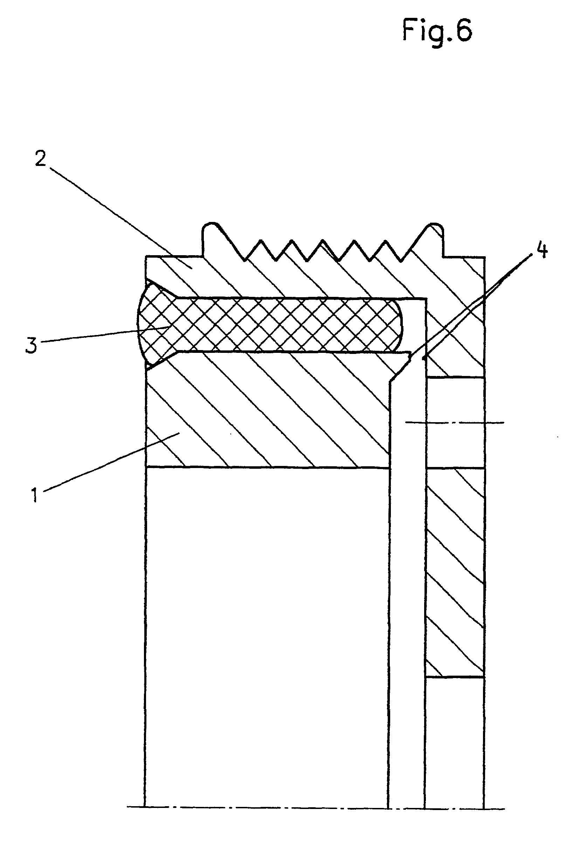

In den Figuren 3 und 6 werden zwei Ausführungen eines gebrauchsfertigen Torsionsschwingungstilgers gezeigt, bei denen in dem radialen Zwischenraum zwischen dem Schwungring 1 und dem Nabenring 2 ein Gummiring 3 unter elastischer Deformierung eingepreßt ist. Die radiale Verpressung des Gummiringes 3 ist dabei so bemessen, daß sich während einer relativen Verdrehung des Schwungringes 1 in bezug den Nabenring 2 keinerlei gleitende Bewegung ergibt. Die gesamte relative Verdrehung des Schwungringes 1 in bezug auf den Nabenring 2 wird ausschließlich durch eine elastische Deformierung des Gummiringes 3 aufgenommen und hat den Zweck, die anregende Schwingung zu vermindern.

Selbstverständlich ist es ebenfalls möglich, anstelle eines eingeschlossenen Gummiringes 3 einen unmittelbar einvulkanisierten Gummiring zu verwenden. Hierzu ist es lediglich erforderlich, den Schwung- und den Nabenring in ein entsprechendes Vulkanisationswerkzeug einzulegen und in den verbleibenden, radialen Zwischenraum zwischen beiden Ringen mit einer vulkanisierbaren Gummimasse zu füllen und die Gummimasse durch Vulkanisation zu verfestigen und mit den beiden Ringen zu verbinden.

## Patentansprüche

1. Verfahren zur Herstellung eines Torsionsschwingungstilgers, bei dem ein Schwung- und ein Nabenring (1, 2) erzeugt und durch nachträgliches Einfügen eines Gummiringes (3) relativ verdrehbar verbunden werden, **dadurch gekennzeichnet, daß** der Schwung- und der Nabenring (1, 2) mit einer Sollbruchstelle (4) an der Übergangsstelle in Gestalt eines einteiligen Werkstücks erzeugt werden und daß die Sollbruchstelle (4) vor oder nach dem Einfügen des Gummiringes (3) ohne Werkstoffentnahme zerstört wird.

2. Verfahren nach Anspruch 1, **dadurch gekennzeichnet, daß** der Nabenund der Schwungring (1, 2) zur Zerstörung der Sollbruchstelle (4) in axialer Richtung relativverschoben werden.

## Claims

1. A method for the production of a torsional vibration absorber, in which a fly ring and a hub ring (1, 2) are produced and connected in a manner that allows relative rotation by subsequent insertion of a rubber ring (3), **characterized in that** the fly ring and the hub ring (1, 2) are produced with a predetermined breaking point (4) at the transition in the form of a one-piece workpiece, and **in that** the predetermined breaking point (4) is destroyed without removal of material before or after the insertion of the rubber ring (3).

2. A method according to claim 1, **characterized in that** the hub ring and the fly ring (1, 2) are subjected to relative displacement in the axial direction to destroy the predetermined breaking point (4).

## Revendications

1. Procédé de fabrication d'un amortisseur de vibrations torsionnelles, dans lequel un volant et une frette de roue (1, 2) sont produits et reliés d'une manière permettant une torsion relative par l'insertion ultérieure d'un anneau en caoutchouc (3), **caractérisé en ce que** le volant et la frette de roue (1, 2) sont produits avec un point de rupture (4) sous forme d'une pièce en une partie au niveau de la transition, et **en ce que** le point de rupture (4) est détruit, avant ou après l'insertion de l'anneau en caoutchouc (3), sans prélèvement de matériau.

2. Procédé selon la revendication 1, **caractérisé en ce que** la frette de roue et le volant (1, 2) sont soumis à une torsion relative dans la direction axiale pour détruire le point de rupture (4).
